# EUROPÄISCHE PATENTSCHRIFT

(11) **EP 1 233 109 B1**
(45) Veröffentlichungstag und Bekanntmachung des Hinweises auf die Patenterteilung: **28.03.2007**
(21) Anmeldenummer: 02003022.7
(22) Anmeldetag: 12.02.2002
(51) Int. Cl.: E02B 3/10

(54) **Hohlkörper-Bauelement insbesondere für den Hochwasserschutz und Bauplatte zu seiner Herstellung**
Hollow building element, particularly for flood protection and panel for its construction
Elément de construction creux, en particulier pour la protection contre les inondations et plaque pour former un tel élément

(30) Priorität: 15.02.2001 DE 10106916
(43) Veröffentlichungstag der Anmeldung: 21.08.2002
(73) Patentinhaber: Kettenburg, Horst, 28197 Bremen (DE); Howe, Helmut, 27339 Riede (DE)
(72) Erfinder: Kettenburg, Horst, 28197 Bremen (DE); Howe, Helmut, 27339 Riede (DE)
(74) Vertreter: Eisenführ, Speiser & Partner

(56) Entgegenhaltungen:
- DE-A- 3 942 103
- DE-A- 19 707 665
- DE-A- 19 807 640
- DE-U- 29 919 236
- FR-A- 2 032 076
- GB-A- 542 379
- GB-A- 2 299 606
- US-A- 3 567 536

## Beschreibung

Die Erfindung betrifft ein Bauelement nach dem Oberbegriff von Anspruch 1. Die Erfindung betrifft ferner eine Bauplatte nach dem Oberbegriff von Anspruch 15 zur Verwendung insbesondere für die Wasser-Rückhaltung im Deich- und sonstigen Hochwasserschutz, bestehend aus einem langgestreckten, allseitig geschlossenen und durch eine verschließbare Öffnung mit Wasser u.a. befüllbaren Behälter mit einer versteiften Wandung.

Temporäre oder bleibende Schutzdämme aus derartigen Bauelementen sind vielfältig bekannt. Sie bestehen regelmäßig aus flexiblen Schläuchen unterschiedlichen, aber meist kreisförmigen Querschnitts, die ihre Form und gewisse Stabilität erst durch die Wasserfüllung erhalten (DE 195 18 718 A1, DE 197 54 340 A1, GB 2,299,606 A, EP 0 721 028 A2, WO 96/27710, DE 35 00 560 A1 und DE 299 19 236 U1). Der Vorteil solcher schlauchförmigen Bauelemente besteht in ihrem ungefüllt geringen Gewicht und - zusammengelegt - geringen Volumen für den Transport an den Einsatzort. Nachteilig ist ihre geringe Stabilität im Betrieb insbesondere auf unebener Unterlage sowie vor allem die Empfindlichkeit gegen äußere Beschädigungen bei ihrer zwangsläufig rauen Handhabung und Beanspruchung.

Bei der aus der vorstehend zuletzt genannten DE 299 19 236 U1 bekannten Überschwemmungs-Schutzvonichtung sind deshalb Verstärkungsfäsem und -schichten in den Schlauch eingearbeitet, welche die Stabilität auch unter dem Druck der Wasserfüllung erhöhen sollen. Zusätzlich können Seile oder Schnüre kreuz und quer im Innern des im Querschnitt dreieckig prismatisch ausgebildeten Schlauches angeordnet werden, und schließlich wird auch die Einbringung eines versteifenden Gestells aus hartem Material in den Innenraum des Schlauches vorgeschlagen. Mehrere Schlauchelemente sollen entlang dem Umfang ihrer Stirnwände durch Reißverschlüsse zu längeren Wasserbarrieren verbunden werden können.

Aus DE 197 07 665 A1 ist eine Bauplatte nach dem. Oberbegriff von Anspruch 1 bekannt. Die Bauplatte besteht aus mehreren Lagen, die einerseits aus schmelzbarem Kunststoffgranulat und andererseits aus Festigkeitsträgem wie Fäden, Gewebe, Gestricke oder Gitter bestehen. Die verschiedenen Lagen werden wechselweise in der Bauplatte angeordnet und bewirken somit einen verstärkten Verbundwerkstoff.

Aus US 3,567,536 ist ein Treibstofftank bekannt, der aus einer Wandung hergestellt ist, die ebenfalls aus mehreren Lagen von wechselweise angeordnetem Gewebe und Kunststoffmaterial hergestellt ist.

Es besteht ein Bedarf für eine Bauplatte, die bei verbesserter Ökobilanz ermöglicht, dass strukturell beanspruchte Bauteile aus mehreren solcher Bauplatten hergestellt werden können. Diesem Bedarf wird mit dem erfindungsgemäßen Bauelement Anspruch 1 und der Bauplatte zu seiner Herstellung nach Anspruch 15 nachgekommen.

Von besonderem Vorteil ist, dass die Lagen aus elastischem Material aus aufbereitetem (recyceltem) Altreifen-Gummigranulat bestehen. Die Lagen können entweder wasserdicht ausgebildet sein oder ihre Wasserdichtigkeit durch Beschichtungen etwa einer Lage aus wasserabweisendem Material auf der Außenseite (und ggf. der Innenseite) der Wandung erhalten.

Die Erfindung greift den Gedanken des Bildens temporärer oder bleibender Dämme aus länglichen und zur Erhöhung ihres Gewichts befüllbaren hohlen Bauelementen auf, verwirft wegen der vorstehend dargelegten Nachteile aber deren Schlauch-Charakter und zeichnet sich dadurch aus, dass die Wandung mehrere Lagen aus elastischem Material aufweist, die zur Bildung einer im wesentlichen starren Platte flächig miteinander verbunden sind und zwischen sich mindestens eine formsteife Lage aus Stahldrähten befestigen. Auf diese Weise erwirbt das Bauelement eine punktuell elastische Unempfinchichkeit gegen Stöße, besitzt aber insgesamt eine weitgehend starre Formsteifigkeit, die zwar das Leergewicht erhöht und das Transportvolumen vergrößert dafür aber eine ungleich höhere Handhabungs- und Betriebssicherheit als die bekannten flexiblen Schläuche bietet. Auch ist es möglich, an die Stelle der üblichen Wasserfüllung eine Füllung mit Sand oder flüssig eingefülltem Beton (bei bleibenden Dämmen) vorzusehen, woraus ein entsprechend höheres Einsatzgewicht resultiert.

Die Stahldrahteinlage kann aus einem Stahldrahtgewebe relativ großer Maschenweite (z.B. 50-100 mm) bestehen und Federstahl-Eigenschaften haben.

Die Festigkeit der Plattenwandung kann ferner dadurch erhöht werden, dass zwischen weiteren Lagen aus elastischem Material Netze aus Stahlgewebe, aus Kunststoff und ähnlichem befestigt sind.

Besonders bevorzugt ist die gleichseitig dreieckige Querschnittsform, die als solche aus der DE 299 19 236 U1 bekannt ist. Bei dieser können weitere Verstärkungen etc. vorgesehen sein, die sich aus der nachfolgenden Beschreibung von Ausführungsbeispielen sowie den hierauf gerichteten weiteren Unteransprüchen ergeben.

In der Zeichnung zeigt
- Fig. 1: eine Explosionsdarstellung des Plattenaufbaus;
- Fig. 2: denselben Plattenaufbau in perspektivischer Ansicht eines abgebrochenen Abschnitts der zusammengesetzten Platte;
- Fig. 3: ein im wesentlichen aus solchen Platten als Wandungen zusammengesetztes Hohlkörper-Bauelement in perspektivischer Darstellung;
- Fig. 4: eine (unterbrochene) Seitenansicht des Elements in Fig. 3;
- Fig. 5: eine aufgeschnittene teilweise Innenansicht des in Fig. 4 rechten Elementendes;
- Fig. 6: eine Seitenansicht des Bauelements der Fig. 4 von rechts;
- Fig. 7: eine Seitenansicht des Bauelements in Fig. 4 von links;
- Fig. 8: einen Schnitt durch das Bauelement gemäß der Linie VIII-VIII in Fig. 5; und
- Fig.9: eine perspektivische Ansicht gestaffelt zusammengesetzter Bauelemente gemäß den Fig. 3 - 8.

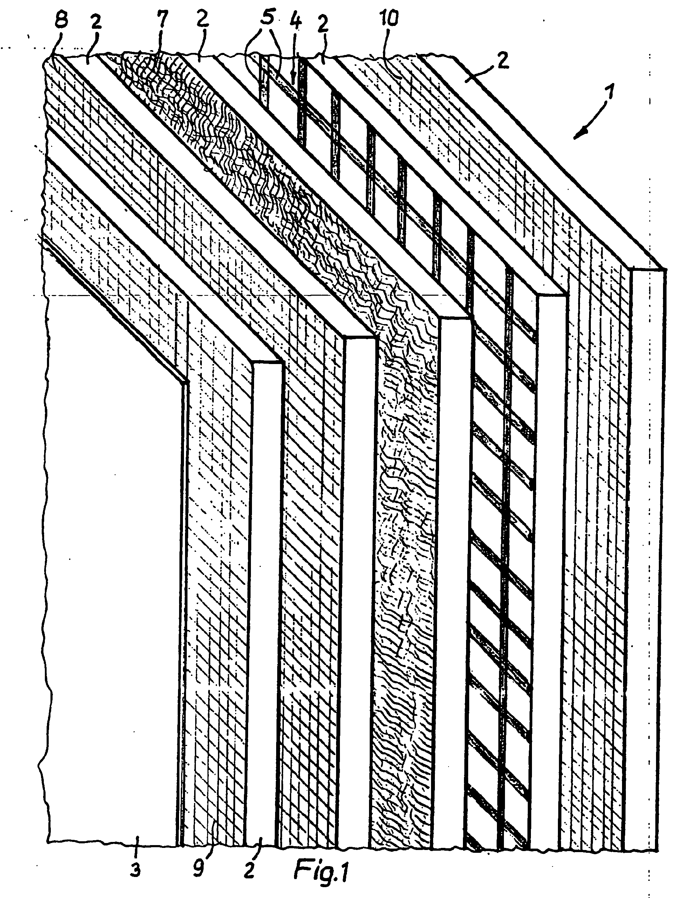

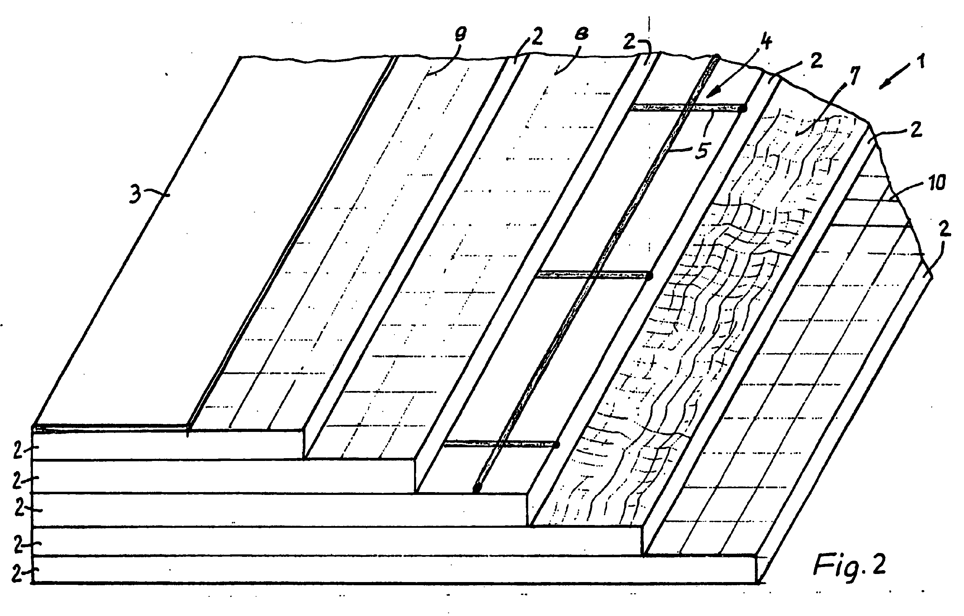

Der den Fig. 1 und 2 entnehmbare Aufbau einer Bauplatte 1 weist mehrere - im Beispiel 5 - gleichartige Lagen 2 aus elastischem Material auf. Dabei kann es sich insbesondere um recyceltes, nämlich granuliertes Gummimaterial aus Altreifen handeln, welches in geeigneter und bekannter Weise zu derartigen Lagen verarbeitet wurde. Die einzelnen Lagen von beispielsweise 5 - 10 mm Dicke können in sich wasserundurchlässig sein; insbesondere aber dann, wenn dies nicht der Fall ist, ist auf zumindest einer Seite der Platte 1 eine Außenlage 3 aus wasserabweisendem Gummi- oder ähnlich elastischem Material angeordnet.

Zwischen den Lagen 2 sind zumindest teilweise Verstärkungs- und/oder Versteifungslagen aus vorzugsweise unterschiedlichem Material angeordnet. So besteht eine formsteife Lage 4 aus Stahldrähten 5 (Durchmesser beispielsweise 1 - 3 mm), die ein an ihren Kreuzungspunkten 6 fixiertes Gitter, also ein Stahldrahtgewebe (mit großer Maschenweite von beispielsweise 50-100 mm) bilden. Die Stahldrähte 5 können aus Federstahl bestehen, so dass temporäre Verformungen der Platte - oder eines daraus hergestellten Bauelements - beim Wegfall der verformenden Kraft rückgängig gemacht werden.

Eine andere (Zwischen-)Lage 7 besteht aus Stahlgewebe herkömmlicher Machart, also einem Material hoher Flexibilität bei ebenfalls hoher Zugfestigkeit.

Weitere (Zwischen-)Lagen 8, 9 und 10 können ebenfalls die Zugfestigkeit der Platte erhöhende Netze aus Kunststoff o.ä. sein.

Fig. 2 macht deutlich, dass im fertigen Zustand die Lagen 2 mit ihren Zwischenlagen 4 und 7 - 10 flächig fest miteinander verbunden sind, durch Verkleben, Vulkanisieren o.ä.

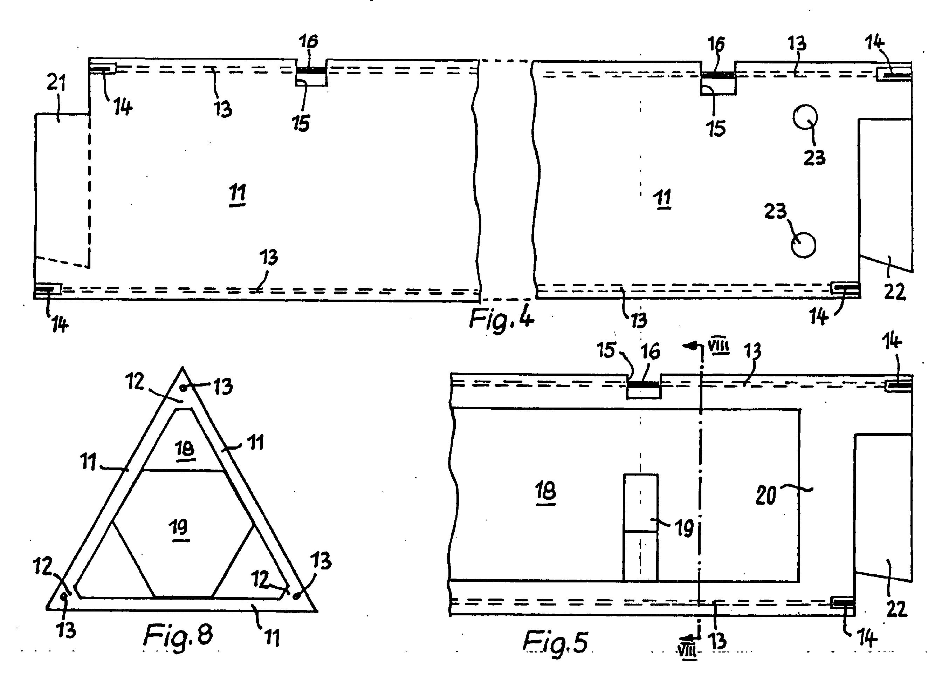

Aus Platten 1 der vorstehend beschriebenen Art bestehen die Seiten- und weitgehend auch die Stirnwände des in den Fig. 3 - 8 dargestellten Hohlkörper-Bauelements von gleichseitigem Dreiecksquerschnitt. Im Querschnitt der Fig. 8 sind die drei gleichartigen Seitenwände mit 11 bezeichnet. Die Eckbereiche 12 sind verdickt, und in diese sind Stahlseile 13 (Durchmesser z.B. 5 - 25 mm) eingearbeitet, die sich parallel zu den Eckkanten der Seitenwände 11-erstrecken und stimseitig in - in Fig. 5 nur schematisch angedeuteten - Ankern 14 enden, an denen bei in Längsrichtung fluchtender Zusammenfügung gleichartiger Bauelemente Schnellspanneinrichtungen (nicht dargestellt) befestigt werden können, welche eine durchgehende Verspannung gegen Zugkräfte herstellen. Außerdem sind die Stahlseile 13 mit den Stahldrähten 5 des Stahldrahtgewebes 4 verbunden.

An mehreren Stellen entlang mindestens einem Eckbereich sind von außen her Einschnitte vorgesehen, welche Ausnehmungen 15 bilden, in denen das Drahtseil 13 frei liegt und durch eine Hülse 16 gegen Beschädigungen geschützt ist. Im Bereich dieser Ausnehmungen 15, von denen in den Fig. 3 und 5 jeweils eine dargestellt ist (vgl. aber Fig. 4), können Hebezeuge für den Transport der Bauelemente in leerem oder gefülltem Zustand angeschlagen werden. Vorzugsweise im Querschnitt fluchtend mit den Ausnehmungen 15 sind im hohlen Innenraum 18 des Bauelements sechseckige Verstärkungswände 19 angeordnet und an den Seitenwänden 11 befestigt; sie bestehen vornehmlich auch aus Platten der in den Fig. 1 und 2 gezeigten Bauform. Auch können an den Hülsen 16 Spannseile angeschlagen sein, die in der Seitenwand 11 zu einer längsversetzten Hülse in einem anderen Eckbereich 12 verlaufen.

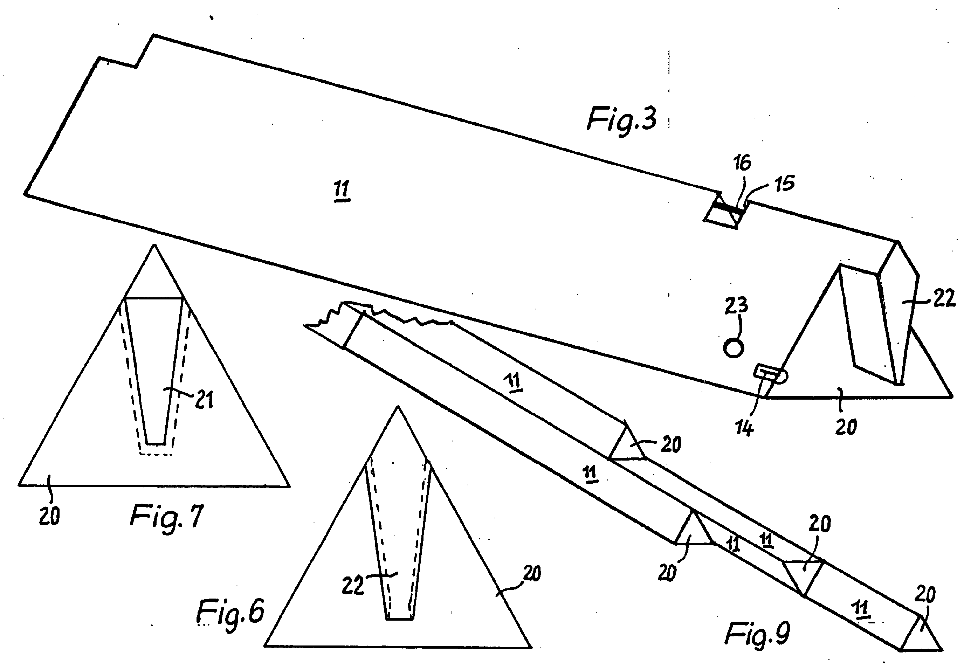

Die gleichseitig dreieckförmigen Stirnwände 20 bestehen ebenfalls aus Plattenmaterial der in den Fig. 1 und 2 gezeigten Art, sind jedoch vorzugsweise diesen gegenüber dicker, also mit mehr Lagen, ausgeführt. An die Stirnwände 20 angesetzt sind Koppelelemente in Form einer Nut 21 an einem Längsende des Bauelements und einer Feder 22 am gegenüberliegenden Längsende. Deren schwalbenschwanzförmige Ausbildung zeigen insbesondere die Fig. 6 und 7.

Die den Ausnehmungen 15 diametral gegenüberliegende Seitenwand 11 kann in Längsrichtung mit Längsrillen versehen werden, um ein seitliches Wegrutschen des Bauelements zu behindern (nicht dargestellt). Verschließbare Öffnungen 23 dienen dem Einfüllen und ggf. Entnehmen von Wasser, Sand u.a.

Neben den vorstehend beschriebenen Hohlkörper-Bauelementen können aus den an Hand der Fig. 1 und 2 beschriebenen Bauplatten auch andere Baukörper beispielsweise für Endlager-Zwecke von Gefahrgütern hergestellt werden. Die Bauplatten können aber auch zum Verschließen von Gebäudeöffnungen dienen, in die sie unter seitlicher Abschrägung ihrer Randflächen einzupressen sind. Die Bauplatten können ferner als Schallschutz und als Schalungselemente - auch unter Wasser - eingesetzt werden, und sie können zur flüssigkeitsdichten Auskleidung von Tankschiffen dienen. Schließlich ist es möglich, die daraus hergestellten Hohlkörper-Bauelemente als Transport- und Rettungsfloß sowie zur Errichtung von Notbrücken einzusetzen, als Aufschwimmhilfe für havarierte Schiffe, jeweils auch in Verbindung mit den zur Herstellung der Bauelemente verwendeten Platten.

## Patentansprüche

1. Hohlkörper-Bauelement zur Verwendung für die Wasserrückhaltung im Deich und sonstigen Hochwasserschutz, bestehend aus einem langgestreckten, allseitig geschlossenen durch eine verschließbare Öffnung mit Wasser. Sand oder flüssigem Beton befüllbarem Behälter mit einer versteiften Wandung, die mehrere Lagen (2) aus elastischem Material aufweist, die zur Bildung einer im wesentlichen starren Platte (1) flächig miteinander verbunden sind und zwischen sich mindestens eine formsteife Lage aus Stahldrähten (5) befestigen,
**dadurch gekennzeichnet, dass** in verdickte Eckbereiche (12) der Seitenwandstöße parallel zu diesen Stahlseile (13) eingearbeitet und mit der Stahldrahteinlage (4) verbunden sind.

2. Hohlkörper-Bauelement nach Anspruch 1,
**dadurch gekennzeichnet, dass** Scharen von Stahldrähten (5) senkrecht zueinander verlaufen und ein an den Kreuzungspunkten fixiertes Gitter (4) bilden (Stahldrahtgewebe).

3. Hohlkörper-Bauelement nach Anspruch 1 oder 2,
**dadurch gekennzeichnet, dass** die Stahldrähte (5) aus Federstahl bestehen.

4. Hohlkörper-Bauelement nach einem der vorhergehenden Ansprüche,
**dadurch gekennzeichnet, dass** die Lagen (2) aus elastischem Material aus aufbereitetem Altreifen-Gummigranulat bestehen.

5. Hohlkörper-Bauelement nach einem der vorhergehenden Ansprüche,
**dadurch gekennzeichnet, dass** zwischen weiteren Lagen (2) aus elastischem Material Netze (7 - 10) aus Stahlgewebe, Kunststoff u. dgl. befestigt sind.

6. Hohlkörper-Bauelement nach einem der vorhergehenden Ansprüche,
**dadurch gekennzeichnet, dass** mindestens auf der Außenseite der Behälter-Wandung (11, 20) eine Lage (3) aus wasserabweisendem Material befestigt ist.

7. Hohlkörper-Bauelement nach einem der vorhergehenden Ansprüche,
**dadurch gekennzeichnet, dass** zwischen zwei im wesentlichen parallelen Stirnwänden (20) drei gleichartige, weitgehend starre Seitenwände (11) einen Behälterkörper von gleichseitig dreieckigem Querschnitt bilden.

8. Hohlkörper-Bauelement nach einem der vorhergehenden Ansprüche,
**dadurch gekennzeichnet, dass** mindestens ein Seitenwand-Eckbereich (12) nahe den Stirnwänden über geringe Längenabschnitte ausgeschnitten (Ausschnitt 15) und das dort freigelegte Drahtseil (13) jeweils von einer beidseitig in die angrenzenden Eckbereiche ragenden Hülse (16) umgeben ist.

9. Hohlkörper-Bauelement nach Anspruch 8,
**dadurch gekennzeichnet, dass** an den Hülsen (16) Spannseile befestigt sind, die in der Wandung (11) jeweils zu längsversetzten Hülsen (16) in einem der anderen Eckbereiche (12) verlaufen.

10. Hohlkörper-Bauelement nach Anspruch 8 oder 9,
**dadurch gekennzeichnet, dass** an den stirnseitigen Drahtseil-Enden Halter (14) für Schnellspannvorrichtungen vorgesehen sind.

11. Hohlkörper-Bauelement nach einem der Ansprüche 8 bis 10,
**dadurch gekennzeichnet, dass** eine Stirnwand (20) eine konische Nut (21) und die andere Stirnwand (20) eine komplementäre Feder (22) aufweist, die im Querschnitt schwalben-schwanzförmig ausgebildet sind.

12. Hohlkörper-Bauelement nach einem der Ansprüche 8 bis 11,
**dadurch gekennzeichnet, dass** die Stirnwände (20) dickwandig, insbesondere als Vollkern ausgebildet sind.

13. Hohlkörper-Bauelement nach einem der Ansprüche 8 bis 12,
**dadurch gekennzeichnet, dass** im Behälterinnenraum (18) parallel zu den Stirnwänden (20) mit Abstand zu diesen und zueinander sechseckige Aussteifungswände (19) an den Seitenwänden (11) befestigt sind, die zu deren Eckbereichen (12) Durchgangsöffnungen freilassen.

14. Hohlkörper-Bauelement nach einem der Ansprüche 8 bis 13,
**dadurch gekennzeichnet, dass** mindestens eine Seitenwand (11) außenseitig mit einem in Längsrichtung verlaufenden Rillenprofil versehen ist.

15. Bauplatte zur Herstellung von Bauelementen nach mindestens einem der vorherstehenden Ansprüche, wobei mehrere Lagen (2) aus aus aufbereitetem Altreifengranulat bestehendem elastischem Material flächig miteinander verbunden und zwischen Ihnen mindestens eine formsteife Lage (4) aus Stahldrähten (5) angeordnet sowie an ihnen befestigt ist,
**dadurch gekennzeichnet, dass** zwischen weiteren Lagen (2) aus elastischem Material Netze (7-10) als Stahlgewebe, Kunststoff u.dgl. befestigt sind.

## Claims

1. A hollow body structural element for use for holding back water in a dyke and other high water protection comprising an elongate container which is closed at all sides and which can be filled through a closable opening with water, sand or liquid concrete, with a stiffened wall which has a plurality of layers (2) of elastic material which are connected together in surface relationship to form a substantially rigid panel (1) and fix between them at least one layer which is stiff in shape and comprising steel wires (5),
**characterised in that** steel cables (13) are incorporated into thickened corner regions (15) of the side wall joints in parallel therewith and are connected to the steel wire inlay (4).

2. A hollow body structural element according to claim 1 **characterised in that** arrays of steel wires (5) extend perpendicularly to each other and form a lattice (4) which is fixed at the intersection points (steel wire mesh).

3. A hollow body structural element according to claim 1 or claim 2 **characterised in that** the steel wires (5) comprise spring steel.

4. A hollow body structural element according to one of the preceding claims **characterised in that** the layers (2) of elastic material comprise processed old tyre rubber granules.

5. A hollow body structural element according to one of the preceding claims **characterised in that** nets (7-10) of steel mesh, plastic material and the like are fixed between further layers (2) of elastic material.

6. A hollow body structural element according to one of the preceding claims **characterised in that** a layer (3) of water-repellent material is fixed at least on the outside of the container wall (11, 20).

7. A hollow body structural element according to one of the preceding claims **characterised in that** between two substantially parallel end walls (20) three similar, substantially rigid side walls (11) form a container body of equilateral triangular cross-section.

8. A hollow body structural element according to one of the preceding claims **characterised in that** at least one side wall corner region (12) near the end walls is cut out over short lengthwise portions (cut-out 15) and the wire cable (13) which is exposed there is enclosed by a respective sleeve (16) which projects at both sides into the adjoining corner regions.

9. A hollow body structural element according to claim 8 **characterised in that** tensioning cables are fixed to the sleeves (16) and extend in the wall (11) to respective longitudinally displaced sleeves (16) in one of the other corner regions (12).

10. A hollow body structural element according to claim 8 or claim 9 **characterised in that** holders (14) for quick-action clamping devices are provided at the wire cable ends at the ends thereof.

11. A hollow body structural element according to one of claims 8 to 10 **characterised in that** an end wall (20) has a conical groove (21) and the other end wall (20) has a complementary tongue (22), which are of a dovetail-shaped configuration in cross-section.

12. A hollow body structural element according to one of claims 8 to 11 **characterised in that** the end walls (20) are of a thick-walled configuration and are in particular in the form of a solid core.

13. A hollow body structural element according to one of claims 8 to 12 **characterised in that** hexagonal bracing walls (19) are fixed to the side walls (11) in the interior (18) of the container in parallel relationship with the end walls (20) at a spacing with respect thereto and with respect to each other, the bracing walls leaving through openings free at the corner regions (12) of the side walls.

14. A hollow body structural element according to one of claims 8 to 13 **characterised in that** at least one side wall (11) is provided on its outside with a groove profile extending in the longitudinal direction.

15. A structural panel for the production of structural elements according to at least one of the preceding claims wherein a plurality of layers (2) of elastic material comprising processed old tyre granules are connected together in surface relationship and at least one layer (4) which is stiff in shape and which comprises steel wires (5) is arranged between them and is fixed to them, **characterised in that** nets (7-10) of steel mesh, plastic material or the like are fixed between further layers (2) of elastic material.

## Revendications

1. Elément de construction creux susceptible d'être utilisé dans une digue ou dans tout autre système de protection contre les crues afin de retenir l'eau, constitué d'un récipient de forme allongée, fermé de tous côtés par une ouverture pouvant être obturée, ledit récipient pouvant être rempli d'eau, de sable ou de béton liquide et présentant une paroi rigidifiée, présentant elle-même plusieurs couches (2) d'un matériau élastique, reliées entre elles en nappe afin de former une dalle essentiellement rigide (1) et retenant fermement entre elles au moins une couche indéformable de fils d'acier (5),
**caractérisé en ce que** dans les zones d'encoignure épaissies (12) des bords de jointure des parois latérales, et parallèlement à ces bords, sont intégrés des câbles d'acier (13), reliés à la couche intérieure de fils d'acier (4).

2. Elément de construction creux selon la revendication 1,
**caractérisé en ce que** des assemblages de fils d'acier (5) disposés perpendiculairement entre eux, sont fixés entre eux aux points d'intersection, formant une grille (treillis d'acier) (4).

3. Elément de construction creux selon l'une quelconque des revendications 1 ou 2,
**caractérisé en ce que** les fils d'acier (5) sont en acier à ressorts.

4. Elément de construction creux selon l'une quelconque des revendications précédentes,
**caractérisé en ce que** les couches (2) de matériau élastique sont constituées de granulé récupéré de pneumatiques usés.

5. Elément de construction creux selon l'une quelconque des revendications précédentes,
**caractérisé en ce que** des grilles (7-10) de treillis d'acier, de matière plastique ou d'un matériau équivalent, sont fixées parmi d'autres couches (2).

6. Elément de construction creux selon l'une quelconque des revendications précédentes,
**caractérisé en ce qu'**une couche (3) de matériau hydrofuge est fixée au moins à la face extérieure de la paroi du récipient (11, 20).

7. Elément de construction creux selon l'une quelconque des revendications précédentes,
**caractérisé en ce qu'**entre deux parois avant, essentiellement parallèles entre elles (20), trois parois latérales (11) du même type et essentiellement rigides, forment un corps de récipient dont la section est un triangle équilatéral.

8. Elément de construction creux selon l'une quelconque des revendications précédentes,
**caractérisé en ce qu'**au voisinage des parois avant, au moins une zone d'encoignure des parois latérales (12) présente de courtes découpures longitudinales (découpure 15), le câble d'acier (13) dégagé dans cette découpure étant entouré d'un manchon (16) pénétrant de part et d'autre dans la zone d'encoignure avoisinante.

9. Elément de construction creux selon la revendication 8,
**caractérisé en ce que** des câbles tenseurs courant à l'intérieur de la paroi (11) vers des manchons (16) déplacés dans le sens de la longueur et situés dans l'une des autres zones d'encoignure (12), sont fixés aux dits manchons (16).

10. Elément de construction creux selon l'une quelconque des revendications 8 ou 9,
**caractérisé en ce que** des supports (14) pour dispositifs tenseurs rapides sont prévus aux extrémités avant des câbles d'acier.

11. Elément de construction creux selon l'une quelconque des revendications 8 à 10,
**caractérisé en ce qu'**une paroi avant (20) présente une rainure conique (21) et l'autre paroi avant (20) une languette complémentaire (22), la rainure et la languette présentant une section en queue d'aronde.

12. Elément de construction creux selon l'une quelconque des revendications 8 à 11,
**caractérisé en ce que** les parois avant (20) sont épaisses et présentent en particulier une structure massive.

13. Elément de construction creux selon l'une quelconque des revendications 8 à 12,
**caractérisé en ce que** des parois de raidissement (19) parallèles aux parois avant (20), situées à une certaine distance de ces dernières et présentant une disposition hexagonale entre elles, sont fixées aux parois latérales (11), laissant libres des ouvertures de passage vers leurs zones d'encoignure.

14. Elément de construction creux selon l'une quelconque des revendications 8 à 13,
**caractérisé en ce qu'**au moins une paroi latérale (11) présente sur sa face extérieure un profilé en forme de rainure orienté dans le sens de la longueur.

15. Dalle de construction permettant la fabrication d'éléments de construction selon au moins l'une des revendications précédentes, plusieurs couches de matériau élastique (2) constitué de granulé de pneumatiques usés, étant reliées entre elles en nappe, au moins une couche indéformable (4) de fils d'acier (5) étant disposée entre elles et y étant attachée,
**caractérisée en ce que** des grilles (7 - 10) de treillis d'acier, de matière plastique ou de matériaux équivalents, se trouvent parmi d'autres couches (2) de matériau élastique et y sont attachées.
